Europäisches Patentamt

European Patent Office

Office européen des brevets

(11) Publication number: **0 342 244 B1**

# EUROPEAN PATENT SPECIFICATION

(45) Date of publication of patent specification: **14.12.94**

(51) Int. Cl.⁵: **C08L 23/08**, C08L 23/26, C08F 8/44

(21) Application number: **88910100.2**

(22) Date of filing: **18.11.88**

(86) International application number:
**PCT/JP88/01168**

(87) International publication number:
**WO 89/04853 (01.06.89 89/12)**

(54) **IONOMER COMPOSITION.**

(30) Priority: **20.11.87 JP 294329/87**

(43) Date of publication of application:
**23.11.89 Bulletin 89/47**

(45) Publication of the grant of the patent:
**14.12.94 Bulletin 94/50**

(84) Designated Contracting States:
**BE DE FR GB IT NL**

(56) References cited:
EP-A- 0 189 553
JP-A- 6 038 443
JP-A- 6 060 867

JOURNAL OF THE SOCIETY OF RHEOLOGY, JAPAN, vol. 14, no. 3, September 1986, pages 113-122; HIRASAWA et al.: "Heat resistant adhesion and melt rheology of the polymer complex between ionomer and polyamide oligomer"

(73) Proprietor: **Du Pont-Mitsui Polychemicals Co., Ltd.**
**2-5, Kasumigaseki 3-chome**
**Chiyoda-ku**
**Chiyoda-ku, Tokyo 100 (JP)**

(72) Inventor: **HIRASAWA, Eisaku**
**543-4, Kamo Ichihara-shi**
**Chiba 281 (JP)**
Inventor: **HATAKEYAMA, Satoru**
**8, Okubo Aza Kumita**
**Syowa-machi**
**Minamiakita-gun Akita 018-14 (JP)**
Inventor: **YAMAMOTO, Yoshimasa**
**1-1, Yusyudai-Higashi**
**Ichihara-shi Chiba 299-01 (JP)**

(74) Representative: **Calamita, Roberto et al**
**Frank B. Dehn & Co.**
**Imperial House**
**15-19 Kingsway**
**London WC2B 6UZ (GB)**

## Description

Field of the Invention

The present invention relates to a composition comprising an ionomer crosslinked by polyamide chains.

More particularly, it relates to a composition comprising an ionomer ionically crosslinked by polyamide chains, said composition having excellent moldability and being capable of providing shaped articles which have, in addition to their excellent transparency and surface gloss, improved mechanical strength at moderately high temperatures, hot oil resistance, deep drawability and resistance to molten breakdown.

Background of the Invention

Shaped articles of an ethylene-unsaturated acid copolymer or its ionomer having at least a part of the carboxyl groups neutralized with metallic cations find wide applications as packaging films and adhesion films in view of their excellent adhesion properties, heat sealability, transparency and oil resistance.

Films of the ethylene-unsaturated acid copolymer or its ionomer having at least a part of the carboxyl groups neutralized with metallic cations are also frequently used in the form of a transparent laminate with other resin film or films having gas-impermeability.

The ethylene-unsaturated acid copolymer and its ionomer are thermoplastic, and are normally formed into shaped articles in molten conditions, for example by inflation or T-die extrusion methods. Packaging or adhesion films so produced are frequently subjected to post-workings by heat, including, for example, heat adhesion, heat sealing and vacuum packaging by heat shrinkage. For this purpose, it is desirable for the films to be post-workable at practicably low temperatures so that the heat workings may not cause any damage of contents to be packaged nor any deformation of objects to which the films are to be adhered.

On the other hand, the films are frequently required to be resistive to practicably high temperatures For example, in a case wherein the film is used in packaging a retort food, the film is required not to be deformed or damaged by heat at the time of retort-treatment of the food. In a case wherein the film is heat adhered to an object, the adhesion between them is required not to be broken, even if the assembly is exposed to a temperature higher than the temperature at which the heat adhesion has been performed.

However, good post-workability at relatively low temperatures and great mechanical strength at moderately high temperatures are conflicting, and therefore, it has been generally difficult to realize these conflicting properties with conventional thermoplastic films.

Ethylene-unsaturated carboxylic acid copolymers and ionomers thereof are thermoplastic resins having a relatively low melting point ranging from about 70 to about 110 °C, and therefore, they are excellent in processability at relatively low temperatures. But they are poor in mechanical strength at moderately high temperatures normally used in retort treatment of foods.

It has heretofore been eagerly desired to improve mechanical strength of such thermoplastic resins at moderately high temperatures, while retaining their inherent good workability at relatively low temperatures. For improving mechanical strength at moderately high temperatures of a film of a thermoplastic resin having a relatively low melting point, there are known in the art a procedure wherein the low melting thermoplastic resin is blended with a high melting thermoplastic resin, and a procedure wherein the film of the low melting resin is crosslinked with an organic peroxide or electron beam irradiation.

In cases wherein a high melting thermoplastic resin such as nylon or polyester is blended with a low melting thermoplastic resin such as an ethylene-unsaturated carboxylic acid copolymer or its ionomer, the resulting blend may have appreciably improved mechanical strength at moderately high temperatures only when the blend contains about 33 % by parts or more of the high melting thermoplastic resin based on 100 parts by weight of the total of the low and high melting resins. The blend with such a high level of tile high melting thermoplastic resin does no more enjoy an advantage originally possessed by the low melting thermoplastic resin that heat workings such as heat adhesion and heat shrinkage are possible at relatively low temperatures. Moreover, in a case of an ethylene-unsaturated carboxylic acid copolymer or its ionomer, its transparency is significantly impaired, when blended with a high melting thermoplastic resin such as nylon or polyester.

If an ethylene-unsaturated carboxylic acid copolymer or its ionomer is crosslinked with an organic peroxide or electron beam, the crosslinked product may have improved mechanical strength at moderately high temperatures, without losing the heat adhesion and heat shrinking properties at relatively low temperatures possessed by the copolymer or its ionomer. However, the copolymer or ionomer crosslinked with an organic peroxide or electron beam irradiation has a reduced melt flow, and is very difficult to be melt formed into shaped articles such as films. If such a crosslinked polymer is melt formed into a film, because of the poor flow of crosslinked portions of the polymer small protrusions and depressions, normally called fish eyes or gels, are formed on the surface of the film, rendering the appearance of the film poor. Such a film of poor appearance can not be used in packaging applications where good appearance is required.

When an ethylene-unsaturated carboxylic acid copolymer or its ionomer is melt shaped into a film, and then the film is crosslinked by irradiation with an energy beam, the resulting crosslinked film may have improved mechanical strength at moderately high temperatures. While this procedure is free from the above discussed problems of poor melt formability and poor product appearance, it is economically disadvantageous in that it requires an expensive and special apparatus for irradiation of energy and an additional step of energy irradiation after a step of forming a film.

As a measure for improving heat resistance of an adhesive film of an ionomer while maintaining its desirable melt adhesion property at relatively low temperatures, Eisaku HIRASAWA et al. have proposed in Japanese Patent Laid-open Publication No. 59-71378 to graft from 3 to 20% by weight of a polyamide oligomer having a primary amino group at one terminal onto side chains of a zinc ionomer. By this measure, heat resistance of an ionomer can be improved without adversely affecting formability of films and appearance of films formed. However, films formed from the graft copolymer involve a problem in that their mechanical strength in the molten condition at moderately high temperatures is still insufficient. As a temperature exceeds the melting point of the polyamide oligomer normally ranging from 180 to 215°C, a melt viscosity of the graft copolymer begins to drastically decrease and films of the graft copolymer are likely to be broken.

Heat resistant adhesion property and rheology of melt blends of a Zn ionomer and a polyamide oligomer having a primary amino group at one terminal of the polyamide chain are discussed by Eisaku HIRASAWA and Hirohide HAMAZAKI in Journal of the Society of Rheology, Japan, Vol. 14, No. 3, pp. 113 - 122 (Sep. 1986). While this article incidentally discloses a melt blend of a Zn ionomer and a polyamide oligomer having primary amino groups at both terminals of the polyamide chain, it is reported in Table VI of this article that this blend has an MFR of 0, as measured at 190 °C, and under a load of 2160 g, indicating its poor melt formability.

It has now been found that an ionomer composition having a specific MFR and comprising an ethylene-unsaturated carboxylic acid and/or at least one ionomer thereof having at least a part of the carboxylic groups neutralized with metallic cations and a specific amount of a polyamide oligomer having primary amino groups on both terminals of the molecule, wherein said copolymer or ionomer is ionically crosslinked with polyamide chains derived from said polyamide oligomer, has an improved mechanical strength at moderately high temperatures over said copolymer or ionomer even with a reduced amount of said polyamide oligomer used, while retaining desirable adhesion properties, heatsealability, transparency and formability at relatively low temperatures which are inherent in said copolymer or ionomer.

The invention is to solve the above-discussed problems associated with the prior art and an object of the invention is to provide an ionomer composition capable of being formed into shaped articles auch as films and sheets having an improved mechanical strength at moderately high temperatures, deep drawability and resistance to molten breakdown as well as good appearance, while retaining desirable properties inherent in films and sheets made of ethylene-unsaturated carboxylic acid copolymers or their ionomers, including transparency, oil resistance and adhesion and heatseal properties at relatively low temperatures.

Disclosure of the Invention

A first ionomer composition according to the invention comprises from 91 to 99 parts by weight of an ionomer comprising an ethylene-unsaturated carboxylic acid copolymer having at least a part of its carboxyl groups neutralized with metallic cations and from 9 to 1 parts by weight of a polyamide oligomer having primary amino groups at both terminals of its chain, said composition having an MFR of from 0,002 to 10 dg/min, as measured at 190 °C. and under a load of 2160 g. in which said ionomer is ionically crosslinked by chains of said polyamide.

A second ionomer composition according to the invention comprises from 91 to 99 parts by weight of a first ionomer comprising an ethylene-unsaturated carboxylic acid copolymer having at least a part of its carboxyl groups neutralized with transition metal cations, from 9 to 1 parts by weight of a polyamide oligomer having primary amino groups at both terminals of its chain and from 2 to 99 parts by weight, based on 100 parts by weight of the combined weight of the first ionomer and the polyamide oligomer, of a second ionomer comprising an ethylene-unsaturated carboxylic acid copolymer having at least a part of its carboxyl groups neutralized with alkali metal or ammonium cations, said composition having an MFR of from 0,002 to 10dg/min, as measured at 190 °C.and under a load of 2160 g, in which at least said first ionomer is ionically crosslinked by chains of said polyamide.

A third ionomer composition according to the invention comprises from 91 to 99 parts by weight of an ethylene-unsaturated carboxylic acid copolymer and from 9 to 1 parts by weight of a polyamide oligomer having primary amino groups at both terminals of its molecule, said composition having an MFR of from 0,002 to 10dg/min, as measured at 190 °C. and under a load of 2160 g, in which said copolymer is at least partially ionically crosslinked by chains of said polyamide.

The ionomer compositions according to the invention are excellently formable to shaped articles such as films having improved mechanical strength at moderately high temperatures and good appearance, in addition to desirable transparency, oil resistance, and adhesion property and heat sealability at relatively low temperatures which are inherent in the ethylene-unsaturated carboxylic acid copolymer or its ionomer.

Brief Description of the Drawings

Fig. 1. is a plan view of a test assembly used in a shear creep test for measuring a load dropping temperature;

Fig. 2 (a) is a plan view of a test assembly used in a shear creep test for measuring a bond failure temperature; and

Fig. 2 (b) is a side view of the assembly of Fig. 2 (a), in which reference numerals designate:

   1 ---A film or sheet to be tested
   2 ---A load of 100 g.
   3 ---An aluminum foil.
   4 ---A film to be tested.
   5 ---A load of 500g.

Best Mode of Carrying out the Invention

The first ionomer composition according to the invention comprises from 91 to 99 parts by weight of an ionomer comprising an ethylene-unsaturated carboxylic acid copolymer having at least a part of its carboxyl groups neutralized with metallic cations and from 9 to 1 parts by weight of a polyamide oligomer having primary amino groups at both terminals of its chain, said composition having an MFR of from 0,002 to 10 dg/min, as measured at 190 °C and under a load of 2160 g, in which said ionomer is ionically crosslinked by chains of said polyamide.

The ethylene-unsaturated carboxylic acid copolymer is a copolymer of ethylene and at least one unsaturated carboxylic acid preferably having from 3 to 8 carbon atoms. Examples of the unsaturated carboxylic acid include, for example, acrylic acid, methacrylic acid, itaconic acid, maleic anhydride, mono-methyl maleate and mono-ethyl maleate. Of these, acrylic acid and methacrylic acid are particularly preferred.

In addition to the ethylene and the unsaturated carboxylic acids, the ethylene unsaturated carboxylic acid copolymer may comprise a third component which may be vinyl compounds having from 3 to 12 carbon atoms, for example, unsaturated carboxylic acid esters such as ethyl acrylate, i-butyl acrylate, n-butyl acrylate and methyl methacrylate; and vinyl esters such as vinyl acetate.

In the ethylene-unsaturated carboxylic acid copolymer, the ethylene component is desirably present in an amount of from 50 to 99 % by weight, preferably from 70 to 98 % by weight, while the unsaturated carboxylic acid component is desirably present in an amount of from 1 to 50 % by weight, preferably from 2 to 30 % by weight

When the ethylene-unsaturated carboxylic acid copolymer contains any third component in addition to the ethylene and unsaturated carboxylic acid components, the third component is desirably present in an amount of up to 40 % by weight, preferably up to 30 % by weight.

In the first ionomer composition according to the invention the ethylene-unsaturated carboxylic acid copolymer has at least a part of its carboxyl groups neutralized with metallic cations, preferably with transition metal cations.

Preferred metallic cations are divalent transition metal cations such as $Zn^{++}$, $Co^{++}$, $Ni^{++}$, $Mn^{++}$, $Pb^{++}$ and $Cu^{++}$, and alkaline earth metal cations such as $Ca^{++}$ and $Mg^{++}$. Of these, $Zn^{++}$ is particularly preferred. It is believed that an ionomer comprising an ethylene-unsaturated carboxylic acid copolymer having at least a part of its carboxyl groups neutralized with divalent transition metal cations is capable of ionically bond to a polyamide oligomer by forming an ammine complex ion between the divalent transition metal ion and a terminal primary animo group of the polyamide oligomer, and therefore divalent transition metal ions are preferred herein.

4

A preferred degree of neutralization of the ethylene-unsaturated carboxylic acid copolymer with divalent metallic ions preferably with divalent transition metal ions is within the range from 3 to 95 mole %.

As metallic ions for neutralizing carboxyl groups of the ethylene-unsaturated carboxylic acid copolymer, alkali metal ions such as $Li^+$, $Na^+$, and $K^+$ are generally not preferred, since such an alkali ion is not capable of forming an ammine complex ion with a terminal primary amino group of a polyamide oligomer. However, an ionomer comprising an ethylene-unsaturated carboxylic acid copolymer having its carboxyl group neutralized up to a degree of neutralization of 20 mole % with alkali ions can be used herein, since such an ionomer can be ionically crosslinked by polyamide chains owing to formation of an ammonium salt between the unneutralized carboxyl group of the ionomer and a terminal primary amino group of the polyamide oligomer.

A reactivity of an ionomer having $Ca^{++}$ or $Mg^{++}$ as metallic cation species with a polyamide oligomer having primary amino groups at both ends of the molecule is not so high as that of an ionomer having divalent transition metal ions such as $Zn^{++}$ or $Co^{++}$ as metallic cation species. It has been confirmed, however, that mechanical strength at high temperatures of an ionomer having $Ca^{++}$ or $Mg^{++}$ as metallic cation species can be improved, when reacted with a polyamide oligomer having primary amino groups at both ends of the molecule. Accordingly, $Ca^{++}$ and $Mg^{++}$ are also usable herein as metallic cation species.

Metallic cation species of the ionomer is not restricted to a single species. An ionomer having two or more metallic cation species can also be used herein.

Known in the art are ionomers having ammonium ions as cation species derived from organic monoamine such as n-hexyl amine or organic polyamine such as m-xylenediamine and hexamethylenediamine. However, such ammonium salt type ionomers are excluded herein because they are inreactive with a polyamide oligomer having end primary amino groups, and in consequence cannot be crosslinked by polyamide chains. It is believed that an amino group of the above-mentioned organic amines has a higher co-ordination ability than the end amino group of the polyamide oligomer.

According to the invention use is made of a polyamide oligomer having primary amino groups at both ends of its chain. The polyamide oligomer can be an oligomer of a lactam having from 3 to 12 carbon atoms, for example, an oligomer of polycaprolactam or polylaurolactam. The polyamide oligomer having primary amino groups at both ends of its molecule can be prepared by following a process for preparing a high molecular weight polyamide from a lactam as mentioned above except for using an excessive amount of a primary diamine as a terminating agent (polymerization regulator).

As the terminating agent we prefer aliphatic, alicyclic and aromatic diamines having from 2 to 20 carbon atoms, including, for example, hexamethylenediamine, m-xylenediamine, 1,3-bis(aminomethyl) cyclohexane, ethylenediamine, butylenediamine and methyliminobispropane amine. Secondary or tertiary amines are unsuitable as the terminating agent, because a polyamide oligomer having secondary or tertiary amino end groups is hardly reactive with ethylene-unsaturated acid copolymer or its metallic ion ionomer.

The polyamide oligomer used herein should preferably have a number average polymerization degree of from 5 to 35. If this average polymerization degree is substantially below 5, the polyamide oligomer has an unduly low melting point, and in consequence mechanical strength of final products at high temperatures will not be appreciably improved. Whereas if the polyamide oligomer has an average polymerization degree substantially in excess of 35, the activity of the primary amino end groups of the polyamide oligomer tends to decrease, resulting in a weakened coordinate ionic bond, whereby mechanical strength of final products at high temperatures could not be appreciably improved. Further, use of a polyamide oligomer having an average polymerization degree substantially in excess of 35 impairs transparency of final products.

The first ionomer composition according to the invention comprises from 1 to 9 parts by weight, of the polyamide oligomer, based on 100 parts by weight of the composition. With substantially less than 1 part by weight of the polyamide oligomer, mechanical strength of final products at high temperatures will not be appreciably improved. Whereas as the content of the polyamide oligomer approaches and exceeds 9 parts by weight, while mechanical strength of final products at high temperatures can be improved, the melt flow of the composition becomes intolerably poor, whereby it becomes difficult to be molded into films.

The above-mentioned ionomer component and the polyamide oligomer component having primary amine end groups at both terminals of the polyamide chain are compounded under molten conditions, for example, at a resin temperature of from 150 to 300 °C, preferably from 200 to 270 °C, whereupon the first ionomer composition in which the ionomer is ionically crosslinked by chains of the polyamide is obtained.

The ionomer composition so obtained has a melt flow rate (MFR) of from 0.002 to 10 dg/min, as measured at 190 °C, and under a load of 2160 g. A composition having an MFR of less than 0.002 dg/min is unsuitable since it has a poor melt processability, whereas a composition having an MFR substantially in excess of 10 dg/min will not provide shaped articles having improved mechanical strength at high temperatures.

5

While the first ionomer composition according to the invention comprising an ionomer ionically crosslinked by polyamide chains can be prepared by melt compounding the preformed ionomer and the polyamide oligomer having primary amino end groups at both terminals of the polyamide chain as described above, it can also be prepared by adding the above-mentioned polyamide oligomer to ethylene-unsaturated acid copolymer being ionized with metallic cations, thereby simultaneously carrying out the ionization with metallic cations and crosslinking with the polyamide oligomer.

Suitable apparatus which can be used in the preparation of the ionomer composition according to the invention are those conventionally used in melt blending or melt processing resins, including, for example, a screw extruder, a Bumbury mixer and a roll mill.

The second ionomer composition according to the invention comprises from 91 to 99 parts by weight of a first ionomer comprising an ethylene-unsaturated carboxylic acid copolymer having at least a part of its carboxyl groups neutralized with transition metal cations, from 9 to 1 parts by weight of a polyamide oligomer having primary amino groups at both chain terminals and from 2 to 99 parts, preferably from 10 to 50 parts, by weight, based on 100 parts by weight of the combined weight of the first ionomer and the polyamide oligomer, of a second ionomer comprising an ethylene-unsaturated carboxylic acid copolymer having at least a part of its carboxyl groups neutralized with alkali metal or ammonium cations, said composition having an MFR of from 0,002 to 10 dg/min, as measured at 190 °C and under a load of 2160 g, in which said first ionomer is at least partially ionically crosslinked by chains of said polyamide, and in some cases said second ionomer is also at least partially ionically crosslinked by chains of said polyamide

In the second ionomer composition according to the invention, the first ionomer is an ionomer referred to hereinabove as being preferred in the first ionomer composition according to the invention that is an ionomer comprising an ethylene-unsaturated carboxylic acid copolymer having at least a part of its carboxyl groups neutralized with transition metal cations and the polyamide oligomer may be the same as described hereinabove with respect to the first ionomer composition according to the invention.

The second ionomer which can be used in the second ionomer composition according to the invention is an ionomer comprising an ethylene-unsaturated carboxylic acid copolymer having at least a part of its carboxyl groups neutralized with alkali metal or ammonium cations. The alkali metal cations can be $Li^+$, $Na^+$ or $K^+$. Of these, $Na^+$ is particularly preferred. The second ionomer comprising an ethylene-unsaturated carboxylic acid copolymer having at least a part of its carboxyl groups neutralized with ammonium ions may be obtained by at least partly neutralizing an ethylene-unsaturated acid copolymer with an organic amine having from 1 to 15 carbon atoms, including organic monoamines such as n-hexylamine and organic polyamines such as m-xylenediamine and hexamethylenediamine.

The second ionomer is present in the second ionomer composition according to the invention in an amount of from 2 to 99 parts by weight, preferably from 10 to 50 parts by weight, based on 100 parts by weight of the combined weight of the first ionomer and the polyamide oligomer.

Incorporation of the above-specified amount of the second ionomer enhances melt processability and workability of the second ionomer composition according to the invention, which is capable of being melt formed into shaped articles having excellent transparency and surface gloss.

As the first ionomer composition, the second ionomer composition according to the invention has a melt flow rate (MFR) of from 0.002 to 10 dg/ min as measured at 190 °C and under a load of 2160 g.

The third ionomer composition according to the invention comprises from 91 to 99 parts by weight of an ethylene-unsaturated carboxylic acid copolymer and from 9 to 1 parts by weight of a polyamide oligomer having primary amino groups at both terminals of its molecule, said composition having an MFR of from 0,002 to 10 dg/min, as measured at 190 °C and under a load of 2160 g, in which said copolymer is ionically crosslinked by chains of said polyamide.

The third ionomer composition according to the invention can be obtained by compounding the ethylene-unsaturated carboxylic acid copolymer together with the polyamide oligomer having primary amino groups at both ends of its chain under molten conditions, for example at a resin temperature of from 150 to 300 °C, preferably from 200 to 270 °C. It is believed that upon such compounding under molten conditions, the carboxyl groups of the ethylene-unsaturated carboxylic acid copolymer react with the primary amino groups of the polyamide oligomer to form ammonium salts thereby forming crosslinking ionic bonds. Accordingly, it is believed that the ethylene-unsaturated carboxylic acid copolymer and the polyamide oligomer form an ionomer in which the ethylene-unsaturated carboxylic acid copolymer is ionically crosslinked by chains of the polyamide oligomer.

The third ionomer composition comprising an ionomer in which the ethylene-unsaturated carboxylic acid copolymer is ionically crosslinked by chains of the polyamide can be formed into shaped articles by the same melt forming processes as described hereinabove with respect to the first ionomer composition in which the first ionomer comprising the ethylene-unsaturated carboxylic acid copolymer having at least a

EP 0 342 244 B1

part of its carboxyl groups neutralized with metallic cations is ionically crosslinked by chains of the polyamide.

While the ionomer compositions according to the invention are useful in forming shaped articles, including films, sheets and other shaped articles such as golf balls, processes for forming the ionomer compositions according to the invention into films will now be described in detail.

Various film forming methods, including calendering, inflation, T-die extrusion and solution casting methods may be used. Of these inflation and T-die extrusion methods are preferred.

Upon forming the composition according to the invention into films by methods described above, the forming temperature can be within the range of from 150 to 300 °C, preferably from 180 to 280 °C.

It is generally difficult to thermally form a crosslinked resin into shaped articles. However, different from covalent linkage, bond strength of ionic linkage greatly depends upon the temperature and shear rate, and in general the higher the temperature or the shear rate, the lower the bond strength of ionic linkage. Thus, the ionomer compositions according to the invention comprising an ionomer ionically crosslinked by polyamide chains can be easily melt formed into shaped articles if the conditions are appropriately selected.

Films of a single layer may be prepared from the ionomer composition according to the invention by inflation or extrusion methods. Alternatively, laminate films of two or more layers may be prepared by coextruding the composition according to the invention simultaneously with other thermoplastic resin or resins such as polyolefins, ethylene copolymers, ionomers, polyamides, polyesters and polyvinylidene chlorides.

The films so prepared comprise an ionomer crosslinked by polyamide chains, and have improved mechanical strength at moderately high temperatures, and therefore there is not necessary any step of irradiation with electron beam prior or subsequent to the film formation step, rendering the costs of manufacturing films inexpensive.

Incidentally, Japanese Patent Laid-open Publication No, 59-157,122 discloses thick shaped articles having improved heat resistance or heat resistant adhesion property comprising an ionomer having grafted thereon via ionic linkage a polyamide oligomer having a primary amino group on one terminal of the polyamide chain. When compared with this prior art, according to the invention a polyamide oligomer having primary amino groups at both terminals of the polyamide molecule is utilized, thereby providing compositions in which polymer chains of an ethylene-unsaturated carboxylic acid or its metallic cation ionomer are crosslinked by polyamide chains, and which are productive of shaped articles having improved mechanical strength at moderately high temperatures well comparable to that of the prior art shaped articles in which a polyamide oligomer having a primary amino group at one terminal of the polyamide chain is utilized in an amount twice or more the amount of the polyamide oligomer having primary amino groups at both terminals of the polyamide chain utilized in the compositions according to the invention. Thus, according to the invention shaped articles having improved mechanical strength at moderately high temperatures, while retaining advantages such as good sealability inherent in ionomers, can be prepared at reduced manufacturing costs.

Since films of the compositions according to the invention are excellent in adhesion properties, heat sealability and mechanical strength at moderately high temperatures, they are advantageously used as packaging materials where mechanical strength at moderately high temperatures is required, in particular, for packaging retort foods which are cooked by heat in the packaged condition, and for packaging raw meat or processed meats such as ham and sausage which are sterilized by heat in the packaged condition.

Further, since the ionomer compositions provide shaped articles having excellent mechanical strength at moderately high temperatures, they are advantageously used as materials for producing automobile interior, furniture and electronic parts. In view of their excellent heat resistant adhesive properties they are also suitable for use in the production of heat adhesive films,

The ionomer compositions according to the invention also find applications in producing shaped articles such as sheets and golf balls.

Effect of the Invention

The ionomer compositions according to the invention are capable of being formed into shaped articles not only retaining desirable properties, including transparency, drawability, hot oil resistance, adhesive properties and heat sealability, which are inherent in the ethylene-unsaturated carboxylic acid copolymers or their ionomers, but also having improved mechanical properties at moderately high temperatures and good appearance.

7

The invention will now be further illustrated by the following examples. It should be appreciated that the invention is by no means restricted to the examples.

Methods for testing materials (polymers) and products (films or sheets) used in the examples are as follows.

Melting point and MFR

The melting point was determined by measuring the crystalline melting point by means of a differential scanning calorimeter (DSC). The melt flow rate (MFR) was determined in accordance with JIS K-6760 under a load of 2160 g at a temperature of 190 or 230 °C.

Load drop temperature

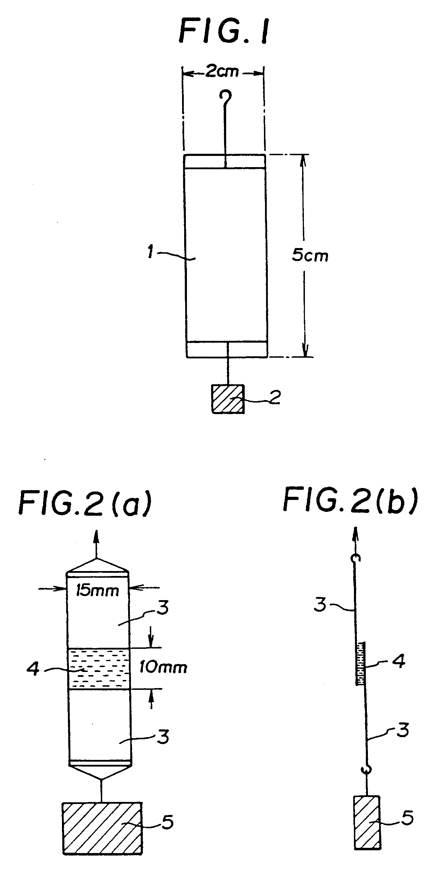

The load drop temperature was determined by the following creep test. As shown in Fig. 1, a test assembly comprising a strip 1 having a width of 2 cm and a length of 5 cm, of overlapping two films, each having a thickness of 100 $\mu$m, or of a sheet having a thickness of 1 mm to be tested, with a suspended load 2 of 100 g was prepared. The test assembly so prepared was hung in an oven, where it was heated from a temperature of 70 °C at a constant heating rate of 30 °C/hr. During this step of heating a temperature at which the strip was elongated and broken to cause the load to drop, which temperature is referred to herein as the load drop temperature, was determined. The load drop temperature can be a measure reflecting the heat resistance of the tested film or sheet. That is, the higher the load drop temperature the better the heat resistance of the film or sheet.

Bond failure temperature

The bond failure temperature was determined by the following shear creep test. As shown in Figs 2(a) and 2(b), a test assembly was prepared by sandwiching a film 4 to be tested of a thickness of 100 $\mu$m, a width of 15 mm and a length of 10 mm, between an end portion of an upper aluminum foil 3 having a thickness of 100 $\mu$m, a width of 15 mm and a length of 100 mm and a top portion of a lower aluminum foil 3 of the same dimension (see Fig. 2 (b)), adhering the film 4 to the aluminum foils 3 by pressing them together at 200 °C, and banging a load 5 of 500 g from the lower end of the lower aluminum foil. The test assembly so prepared was hung in an oven, where it was heated at a constant heating rate of 15 °C/hr. During this step of heating a temperature at which the adhesion of the film to the aluminum foils was broken to cause the load to drop, which temperature is referred to herein as the bond failure temperature, was determined. The bond failure temperature can be a measure reflecting the heat resistant adhesive property ( strength at elevated temperatures) of the tested film.

Hot oil resistance

Using a vacuum packaging machine (Skin tight packer supplied by Shin-meiwa Co. Ltd.) a cylindrical pipe of paper board having an outer diameter of 96 mm, an inner diameter of 76 mm and a height of 50 mm was skin-packaged with an inflated film to be tested having a thickness of 150 $\mu$m under heating with an infrared heater.

From the bottom of the cylindrical package so obtained, a sample of the inflated film was taken. The film sample was held on a frame of a holder, coated with lard and heated in an autoclave at a temperature of 100 °C for 10 minutes. At the end of the period the film was taken out, chilled with ice water, and the surface of the film was visually observed as to cracking and blushing.

Maximum drawable depth

The skin packaging of a cylindrical pipe of paper board with an inflated film of a thickness of 150 $\mu$m mentioned above was repeated with gradually increasing the height of the pipe to be skin packaged, until the film broke to fail the packaging. The highest height of the pipe that could be skin packaged without fail was determined and is referred to herein as the maximum drawable depth of the tested film. The higher the maximum drawable depth, the better the drawability at elevated temperatures.

Molten breakdown time

Two sheets of inflated film, each having a thickness of 150 $\mu$m, were heat sealed together with an impulse sealer having a sealing part of a width of 5 mm and a length of 300 mm at a temperature of 220 °C and under a pressure of 2 kg/cm², while varying the heat sealing time. The minimum heat sealing time at which the films were broken down with heat was determined and is referred to herein as the molten breakdown time of the tested film. The longer the molten breakdown time the better the mechanical strength at elevated temperatures.

Heat deformation temperature

A sheet sample having a length of 100 mm, a width of 20 mm and a thickness of 3 mm was horizontally supported along one 20 mm side on the upper end of a fixer having a height of 100 mm from a base plane with the other 20 mm side of the sheet sample free, heated in an oven maintained at a predetermined temperature for 2 hours and an amount of deformation (100-x) in mm, wherein x is a heat sag in mm, that is a height of the other 20 mm side of the sheet sample from the base plane, was measured. A percent of heat deformation was determined according to the following equation:

% deformation = $\{(100 - x)/100\} \times 100$

The % deformation was plotted against the temperature, and a temperature at which the % deformation is 20 % was determined and is referred herein as the heat deformation temperature of the tested sample.

Ethylene-unsaturated acid copolymers and their ionomers having a part of their carboxyl groups neutralized with metallic cations, which were employed in Examples 1 - 10 and Comparative Examples 1 - 14, are indicated in Table 1 below. Polyamide oligomers (PAO), which were employed in Examples 1 - 10 and Comparative Examples 1 - 14, are indicated in Table 2 below.

## Table 1

### Ethylene-unsaturated carboxylic acid copolymers and iomomers thereof used in Examples 1 - 10 and Comp. Examples 1 - 14

| | Composition of copolymer | Cation | Neutralization degree, mol % | MFR (190 °C) dg/min. |
|---|---|---|---|---|
| Copolymer 1 | Et-MA copolymer (MA content of 15 wt %) | – | – | 25 |
| Ionomer 1 | Et-MA copolymer (MA content jof 15 wt %) | Zn ++ | 60 | 0.7 |
| Ionomer 2 | Et-MA copolymer (MA content of 15 wt %) | Zn ++ | 20 | 14.0 |
| Ionomer 3 | Et-MA copolymer (MA content of 10 wt %) | Na + | 55 | 1.3 |
| Copolymer 2 | Et-MA copolymer (MA content of 12 wt %) | – | – | 14.0 |
| Ionomer 4 | Et-MA copolymer (MA content of 10 wt %) | Zn ++ | 71 | 1.1 |
| Ionomer 5 | Et-MA copolymer (MA content of 9 %) | Na + | 50 | 0.5 |

Et : ethylene;     MA : methacrylic acid

## Table 1 (continued)

| | Composition of copolymer | Cation | Neutralization degree, mol % | MFR (190 °C) dg/min. |
|---|---|---|---|---|
| Copolymer 3 | Et-MA copolymer (MA content of 15 wt %) | – | – | 60 |
| Ionomer 6 | Et-MA copolymer (MA content of 15 wt %) | Zn$^{++}$ | 59 | 0.7 |
| Ionomer 7 | Et-MA copolymer (MA content of 11 wt %) | Na$^{+}$ | 37 | 10 |
| Ionomer 8 | Et-MA copolymer (MA content of 10 wt %) | Na$^{+}$ | 59 | 0.9 |
| Ionomer 9 | Et-MA copolymer (MA content of 10 wt %) | Na$^{+}$ | 54 | 1.3 |
| Ionomer 10 | Et-MA-i-BuA terpolymer (acid content of 10 wt %) | Zn$^{++}$ | 73 | 1.9 |

Et : ethylene;     MA : methacrylic acid;     i-BuA : isobutyl acrylate

EP 0 342 244 B1

Table 2

Polyamide oligomers used in Examples 1 – 10 and Comp. Examples 1 – 14

| | Monomer | Terminal groups | Terminating agent | Polymerization degree * | mp |
|---|---|---|---|---|---|
| PAO-1 | epsilon-caprolactam | $-NH_2$, $-NH_2$ | m-xylenediamine | 15 | 200 °C |
| PAO-2 | epsilon-caprolactam | $-NH_2$, $-NH_2$ | hexamethylene-diamine | 17 | 200 °C |
| PAO-3 | epsilon-caplolactam | $-NH_2$, $-CONHR$ | n-butyl amine | 18 | 213 °C |
| PAO-4 | epsilon-caprolactam | $-NH_2$, $-NH_2$ | m-xylenediamine | 18 | 205 °C |

PAO : polyamide oligomer;   * : number average   R : alkyl group

Example 1

An admixture of 95 parts by weight of pellets of Ionomer-1 and 5 parts by weight of powder of polyamide oligomer PAO - 1 having primary amino groups at both terminals of its chain was supplied to a single screw extruder having a screw diameter of 65 mm and a ratio of length to diameter (L/D) of 33, where the admixture was melt mixed and extruded at a resin temperature of 240 °C and a rate of extrusion of 20 kg/hr to provide pellets of an ionomer crosslinked with polyamide chains. The pellets were clear and transparent.

The pellets so obtained according to the invention were formed into an inflated film of a thickness of 100 $\mu$m by means of an inflation film producing machine having an extruding screw diameter of 30 mm under conditions including a resin temperature of 220 °C and a resin pressure of 265 kg/cm$^2$. The film forming could be carried out without any difficulties. The film so prepared was transparent and substantially free from irregularities such as fish eyes and gel, and thus had a good appearance well comparable to that of an inflated film of Ionomer 1.

Further, the pellets according to the invention were heat pressed at a temperature of 180 °C to a sheet having a thickness of 1 mm.

The film and sheet so prepared were tested for the load drop temperature by the above-mentioned creep test.

The results are shown in Table 3.

Comparative Example 1

Pellets of Ionomer 1 used in Example 1 were formed into an inflated film of a thickness of 100 $\mu$m by means of the inflation film producing machine of Example 1 under conditions including a resin temperature of 220 °C and a resin pressure of 200 kg/cm$^2$. The film so prepared was clear and transparent.

Further, a sheet having a thickness of 1 mm was prepared from the pellets of Ionomer 1 in the same manner as in Example 1.

The film and sheet so prepared were tested for the load drop temperature by the above-mentioned creep test.

Table 3 reveals that the film and sheet of Example 1 made of the composition according to the invention exhibit higher load drop temperatures than those of the products of Comparative Example 1 made of Ionomer 1, indicating improved heat resistance and mechanical strength at moderately high temperatures achieved by the invention.

Comparative Example 2

An admixture of 84 parts by weight of pellets of Ionomer-1 and 16 parts by weight of powder of polyamide oligomer PAO - 1 having primary amino groups at both terminals of its molecule was supplied to the single screw extruder of Example 1, where the admixture was kneaded and extruded at a resin temperature of 240 °C and a rate of extrusion of 20 kg/hr to provide pellets of an ionomer crosslinked with polyamide chains. While the pellets were transparent, a lot of surface irregularities were observed. It was impossible to continuously operate the extruder over a period of 30 minutes, since the resin pressure extraordinarily increased above 400 kg/cm$^2$ during the continued operation.

The pellets of the ionomer crosslinked with polyamide chains so prepared was tested for MFR at temperatures of 190 °C and 230 °C. The pellets were not flowable at both the tested temperatures.

An attempt to form the pellets into films by means of the inflation film forming machine of Example 1 resulted in failure, because the pressure in the machine had unduly increased.

The pellets were hot pressed at a temperature of 220 °C to produce a sheet having a thickness of 1 mm. The sheet was tested for the load drop temperature by the above-mentioned creep test. The results are shown in Table 3.

Comparative Examples 3 - 5

Each of admixtures of Ionomer 1 and a polyamide oligomer having a primary amine end group at one terminal of the molecule (PAO-3) in weight ratios of 95/5 (Comparative Example 3), 90/10 (Comparative Example 4) and 85/15 (Comparative Example 5), respectively, was supplied to the single screw extruder of Example 1, where the admixture was kneaded and extruded at a resin temperature of 240 °C and a rate of extrusion of 20 kg/hr to provide pellets of an ionomer ionically grafted with polyamide chains. The pellets obtained were clear and transparent.

The pellets were tested for MFR at temperatures of 190 °C and 230 °C.

The pellets of these Comparative Examples were hot pressed at a temperature of 180 °C to produce sheets having a thickness of 1 mm, which were tested for the load drop temperature by the above-mentioned creep test. The results are shown in Table 3.

The pellets obtained in Comparative Examples 3 and 4 were formed into inflated films having a thickness of 100 $\mu$m as in Example 1 at a resin temperature of 220 °C. The resin pressure at the time of inflation was 185 kg/cm$^2$ in Comparative Example 3, and 238 kg/cm$^2$ in Comparative Example 4. The films so prepared were tested for the load drop temperature by the above-mentioned creep test. The results are shown in Table 3.

Table 3

| Composition of resin (by weight) | MRF (dg/min.) | | Load drop temp. (°C) | |
|---|---|---|---|---|
| | 190 °C | 230 °C | 1 mm sheet | 100 μm film x 2 |
| Example 1 — Ionomer 1/PAO-1 = 95/5 Ionomer crosslinked with PA* | 0.01 | 0.05 | 180 | 113 |
| Comp. Ex. 1 — Ionomer 1 | 0.7 | 6.2 | 101 | 90 |
| Comp. Ex. 2 — Ionomer 1/PAO-1 = 84/16 Ionomer crosslinked with PA* | N.F.** | N.F.** | >200 | |
| Comp. Ex. 3 — Ionomer 1/PAO-3 = 95/5 Ionomer grafted with PA* | 0.1 | 5.3 | 145 | 100 |
| Comp. Ex. 4 — Ionomer 1/PAO-3 = 90/10 Ionomer grafted with PA* | 0.002 | 1.2 | 153 | 106 |
| Comp. Ex. 5 — Ionomer 1/PAO-3 = 85/15 Ionomer grafted with PA* | N.F.** | 0.78 | 176 | |

PA* : Polyamide chains;    N.F.** : Not flow

Example 2

Example 1 was repeated except that the admixture of 95 parts by weight of pellets of Ionomer-1 and 5 parts by weight of powder of polyamide oligomer PAO - 1 having primary amino groups at both terminals of its molecule, of Example 1, was replaced with an admixture of 91 parts by weight of pellets of Ionomer-2

14

and 9 parts by weight of powder of polyamide oligomer PAO - 2 having primary amino groups at both terminals of its molecule to provide pellets of an ionomer crosslinked with polyamide chains.

The pellets were clear and transparent. They were formed into a transparent inflated film having a thickness of 100 $\mu$m as in Example 1. At the time of inflation, the resin temperature was 220 °C and the resin pressure was 170 kg/cm$^2$.

The film was tested for the bond failure temperature by the above-mentioned shear creep test. The result is shown in Table 4.

Comparative Example 6

A film of Ionomer 2 having a thickness of 100 $\mu$m was tested for the bond failure temperature. The result is shown in Table 4.

Table 4 reveals that the film made of the composition of Example 2 according to the invention has a much higher bond failure temperature than that of the film of Comparative Example 6 consisting of Ionomer 2.

Table 4

|  | Composition of resin (by weight) | Bond failure temp.(°C) |
|---|---|---|
| Example 2 | Ionomer 2/PAO-2 = 91/9 Ionomer crosslinked with PA* | 166 |
| Comp. Ex. 6 | Ionomer 2 | 95 |

PAD*: Polyamide chains

Examples 3 and 4 and Comparative Examples 7 and 8

An admixture of 98 parts by weight of pellets of Copolymer-1 (Example 3) or Copolymer 2 (Example 4) and 2 parts by weight of powder of polyamide oligomer PAO - 1 having primary amino groups at both terminals of its molecule was supplied to a single screw extruder having a screw diameter of 30 mm and a ratio of length to diameter (L/D) of 32, where the admixture was melt mixed and extruded at a resin temperature of 230 °C and a rate of extrusion of 2 kg/hr to provide pellets of an ethylene-methacrylic acid copolymer crosslinked with polyamide chains.

The pellets so prepared were hot pressed at a temperature of 160 °C to a sheet having a thickness of 1 mm. The sheet was tested for the load drop temperature by the above-mentioned creep test. The pellets were further tested for MFR at a temperature of 190 °C. The results are shown in Table 5.

Similar sheets were prepared from Copolymer 1 and 2, respectively and subjected to the creep test to determine the respective load drop temperatures. The results are also shown in Table 5.

Table 5 reveals that when compared with the copolymers of Comparative Examples 7 and 8, the same copolymers crosslinked with polyamide chains of Examples 3 and 4 according to the invention have a reduced MFR and provide films of an increased load drop temperature, that is, having an improved heat resistance.

Table 5

|  | Composition of resin (by weight) | MFR (dg/min) 190 °C. | Load drop temp. (°C) |
|---|---|---|---|
| Example 3 | Copolymer 1/PAO-1 = 98/2 | 0.5 | 94 |
| Example 4 | Copolymer 2/PAO-1 = 98/2 | 0.4 | 97 |
| Comp. Ex. 7 | Copolymer 1 | 25 | 92 |
| Comp. Ex. 8 | Copolymer 2 | 14 | 94 |

EP 0 342 244 B1

Example 5 and Comparative Examples 9 and 10

An admixture of 70 parts by weight of pellets of Ionomer 4, 25 parts by weight of pellets of Ionomer 3 and 5 parts by weight of powder of polyamide oligomer PAO - 1 having primary amino groups at both terminals of its chain was supplied to the single screw extruder of Example 3, where the admixture was melt mixed and extruded at a resin temperature of 230 °C and an output rate of 2 kg/hr to provide pellets of a mixed ionomers crosslinked with polyamide chains. The pellets so prepared were clear and transparent.

The pellets so prepared were formed into an inflated film having a thickness of 150 $\mu$m by means of the inflation film forming machine of Example 1. The film was transparent and had surface gloss. The film was tested for the hot oil resistance, maximum drawable depth and molten breakdown time by the above-mentioned test procedures. The results are shown in Table 6.

Films were similarly prepared from Ionomers 3 and 5, respectively, and tested for the hot oil resistance, maximum drawable depth and molten breakdown time by the above-mentioned test procedures. The results are shown in Table 6.

Table 6

|  | Composition of resin (by weight) | Hot oil resistance | Max. drawable depth (mm) | Molten breakdown time (sec) |
|---|---|---|---|---|
| Example 5 | Ionomer 4/Ionomer 3/PAO-1 = 70/25/5 | Good no change | 105 | 2.0 |
| Comp. Ex. 9 | Ionomer 3 | Bad cracking | 100 | 1.5 |
| Comp. Ex. 10 | Ionomer 5 | Poor blushing | 90 | 1.6 |

Example 6 and Comparative Example 11

The pellets obtained in Example 1 were formed into an inflated film having a thickness of 150 $\mu$m by means of the inflation film forming machine of Example 1. The film was transparent and had surface gloss. The film was tested for the hot oil resistance, maximum drawable depth and molten breakdown time by the above-mentioned test procedures. The results are shown in Table 7.

An inflated film was similarly prepared from Ionomer 1, and tested for the hot oil resistance, maximum drawable depth and molten breakdown time by the above-mentioned test procedures. The results are also shown in Table 7.

Table 7

|  | Composition of resin (by weight) | Hot oil resistance | Max. drawable depth (mm) | Molten breakdown time (sec) |
|---|---|---|---|---|
| Example 6 | Ionomer 1 /PAO-1 = 95/5 | Good no change | 100 | 1.8 |
| Comp. Ex. 11 | Ionomer 1 | Poor coarse surface | 100 | 1.5 |

Example 7 and Comparative Examples 12 and 13

Each resin having a composition indicated in Table 8 was supplied to a single screw extruder having a screw diameter of 30 mm and a ratio of length to diameter (L/D) of 32, where the resin was melt mixed and extruded at a resin temperature of 230 °C and an output rate of 2 kg/hr and the extruded strand was cut into pellets. The pellets so prepared were hot pressed at a temperature of 160 °C to a sheet having a thickness of 1 mm. The sheet was evaluated for the appearance and tested for the load drop temperature by the above-mentioned creep test. The pellets were further tested for MFR at a temperature of 190 °C. The results are shown in Table 8.

The ionomer composition of Example 7 according to the invention can be formed into a sheet having an increased load drop temperature, that is, an improved heat resistance, when compared with a sheet

16

prepared from the ionomer of Comparative Example 12 which was not crosslinked with polyamide chains, and retained a good transparency.

The ionomer composition of Comparative Example 13 having an unduly high content of an alkali ion ionomer (Ionomer 8) could be formed into a sheet having an improved heat resistance. But the sheet was opaque.

Examples 8 and 9 and Comparative Example 14

Each resin having a composition indicated in Table 10 was supplied to a single screw extruder having a screw diameter of 65 mm and a ratio of length to diameter (L/D) of 33, where the resin was melt mixed and extruded at a resin temperature of 230 °C and an output rate of 25 kg/hr to provide pellets of an ionomer crosslinked with polyamide chains. The pellets were then formed into an inflated film having a thickness of 150 $\mu$m by means of an inflation film processing machine having a screw diameter of 30 mm. The resin pressure required at the time of inflation is indicated in Table 10. The film was evaluated for the appearance and tested for the molten breakdown time. The results are shown in Table 10.

Similarly, an inflated film was prepared from pellets of Ionomer 4 and similarly evaluated. The results are also shown in Table 10.

Table 10 reveals that the film of the ionomer composition of Example 8 according to the invention has an improved mechanical strength at moderately high temperatures, as reflected by its longer molten breakdown time, when compared with the film of the ionomer of Comparative Example 14, and still retains a good appearance.

Table 8

| Composition of resin (by weight) | | MRF (dg/min) 190 °C | Load drop temp. (°C) | Transparency |
|---|---|---|---|---|
| Example 7 | Ionomer 6/Ionomer 7/PAO-4 = 75/20/5 | 0.3 | 151 | Good |
| Comp. Ex.12 | Ionomer 1 | 0.7 | 99 | Good |
| Comp. Ex.13 | Ionomer 5/Ionomer 8/PAO-4 = 45/50/5 | 0.10 | 145 | Opaque |

Table 9

| Composition of resin (by weight) | | Resin pressure (kg/cm²) | MRF, 190 °C (dg/min) | Load drop temp. (°C) | Heat D.* temp. (°C) |
|---|---|---|---|---|---|
| Comp. Ex.12 | Ionomer 1 | 265 | 0.7 | 99 | 71 |

Heat D.* : Heat deformation

Table 10

| Composition of resin (by weight) | | MRF,190 C° (dg/min) | Resin press. (kg/cm²) | Molten break-down time (sec) | Appearance |
|---|---|---|---|---|---|
| Example 8 | Ionomer 4/Ionomer 9/PAO-4 = 70/25/5 | 0.30 | 190 | 2.0 | Good |
| Example 9 | Ionomer 10/Ionomer 9/PAO-4 = 80/15/5 | 0.03 | 250 | 1.9 | Good |
| Comp. Ex.14 | Ionomer 4 | 1.1 | 115 | 1.4 | Good |

## Claims

1. An ionomer composition which comprises from 91 to 99 parts by weight of an ionomer comprising an ethylene-unsaturated carboxylic acid copolymer having at least a part of its carboxyl groups neutralized with metallic cations and from 9 to 1 parts by weight of a polyamide oligomer having primary amino groups at both terminals of its chain, said composition having an MFR of from 0.002 to 10 dg/min, as

18

measured at 190 °C and under a load of 2160 g, in which said ionomer is ionically crosslinked by chains of said polyamide.

2. An ionomer composition as claimed in claim 1 wherein said ethylene-unsaturated acid copolymer is ethylene-acrylic acid copolymer, ethylene-methacrylic acid copolymer, ethylene-itaconic acid copolymer, ethylene maleic anhydride copolymer, ethylene-monomethyl maleate copolymer or ethylene-monoethyl maleate copolymer.

3. An ionomer composition as claimed in claim 1 or claim 2 wherein said metallic cations are $Zn^{2+}$, $Co^{2+}$, $Ni^{2+}$, $Mn^{2+}$, $Pb^{2+}$ + $Cu^{2+}$, $Ca^{2+}$ or $Mg^{2+}$.

4. An ionomer composition as claimed in any of the preceding claims wherein said polyamide oligomer is an oligomer having primary amino groups at both terminals of its chain which is obtained by reaction of polycaprolactam with a primary diamine.

5. An ionomer composition which comprises from 91 to 99 parts by weight of a first ionomer comprising an ethylene-unsaturated carboxylic acid copolymer having at least a part of its carboxyl groups neutralized with transition metal cations, from 9 to 1 parts by weight of a polyamide oligomer having primary amino groups at both terminals of its chain and from 2 to 99 parts by weight, based on 100 parts by weight of the combined weight of the first ionomer and the polyamide oligomer, of a second ionomer comprising an ethylene-unsaturated carboxylic acid copolymer having at least a part of its carboxyl groups neutralized with alkali metal or ammonium cations, said composition having an MFR of from 0.002 to 10 dg/min, as measured at 190 °C and under a load of 2160 g, in which at least said first ionomer is ionically crosslinked by chains of said polyamide.

6. An ionomer composition as claimed in claim 5 wherein said ethylene-unsaturated acid copolymer is ethylene-acrylic acid copolymer, ethylene-methacrylic acid copolymer, ethylene-itaconic acid copolymer, ethylene maleic anhydride copolymer, ethylene-monomethyl maleate copolymer or ethylene-monoethyl maleate copolymer.

7. An ionomer composition as claimed in claim 5 or claim 6 wherein said transition metal cations are $Zn^{2+}$, $Co^{2+}$, $Ni^{2+}$, $Mn^{2+}$, $Pb^{2+}$, $Cu^{2+}$, $Ca^{2+}$ or $Mg^{2+}$.

8. An ionomer composition as claimed in any one of claims 5 to 7 wherein said polyamide oligomer is an oligomer having primary amino groups at both terminals of its molecule which is obtained by reaction of polycaprolactam with a primary diamine.

9. An ionomer composition which comprises from 91 to 99 parts by weight of an ethylene-unsaturated carboxylic acid copolymer and from 9 to 1 parts by weight of a polyamide oligomer having primary amino groups at both terminals of its molecule, said composition having an MFR of from 0,002 to 10 dg/min, as measured at 190 °C and under a load of 2160 g, in which said copolymer is ionically crosslinked by chains of said polyamide.

10. An ionomer composition as claimed in claim 9 wherein said ethylene-unsaturated carboxylic acid copolymer is ethylene-acrylic acid copolymer, ethylene-methacrylic acid copolymer, ethylene-itaconic acid copolymer, ethylene maleic anhydride copolymer, ethylene-monomethyl maleate copolymer and ethylene-monoethyl maleate copolymer.

11. An ionomer composition as claimed in claim 9 or claim 10 wherein said polyamide oligomer is an oligomer having primary amino groups at both terminals of its molecule which is obtained by reaction of polycaprolactam with a primary diamine.

**Patentansprüche**

1. Ionomerzusammensetsung, die umfaßt von 91 bis 99 Gewichtstelle eines Ionomeren, das ein Ethylen-ungesättigte Carbonsäure-Copolymeres, bei dem wenigstens ein Teil von dessen Carboxlgruppen mit Metallionen neutralisiert ist, und 9 bis 1 Gewichtsteile eines Polyamid-Oligomeren mit primären Aminogruppen an beiden Enden seiner Kette umfaßt, wobei die Zusammensetzung eine MFR von 0,002 bis 10 dg/Min hat, gemessen bei 190 °C und unter einer Last Von 2160 g, worin das Ionomere durch Ketten des Polyamids ionisch vernetzt ist.

2. Ionomerzusammensetzung nach Anspruch 1, worin das Ethylenungesättigte Säure-Copolymere ein Ethylen-Acrylsäure-Copolymeres, Ethylen-Methacrylsäure-Copolymeres, Ethylen-Itaconsäure-Copolymeres, Ethylen-Maleinsäureanhydrid-Copolymeres, Ethylen-Monolethylmaleat-Copolymeres oder Ethylen-Monoethylmaleat-Copolymeres ist.

3. Ionomerzusammensetzung nach Anspruch 1 oder 2, worin die Metallionen $Zn^{2+}$, $Co^{2+}$, $Ni^{2+}$, $Mn^{2+}$, $Pb^{2+}$, $Cu^{2+}$, $Ca^{2+}$ oder $Mg^{2+}$ sind.

4. Ionomerzusammensetzung nach einem der vorangegangenen AnSprüche, worin das Polyamid-Oligomere ein Oligomere ist, das primäre Aminogruppen an beiden Enden seiner Kette hat, das durch Reaktion von Polycaprolactam mit einem primären Diamin erhalten wird.

5. Ionomerzusammensetsung, die umfaßt 91 bis 99 Gewichtsteile einen ersten Ionomeren, das ein Ethylen-ungesättigte Carbonsäure-Copolymeres umfaßt, bei den wenigstens ein Teil von dessen Carboxylgruppen mit Übergangsmetall-Kationen neutralisiert ist, von 9 bis 1 Gewichtsteile eines Polyamid-Oligomeren mit primären Aminogruppen an beiden Enden seiner Kette und von 2 bis 99 Gewichtsteile, bezogen auf 100 Gewichtsteile des vereinigten Gewichtes des ersten Ionomeren und des Polyamid-Oligomeren, eines zweiten Ionomeren, das ein Ethylen-ungesättigte Carbonsäure-Copolymeres umfaßt, bei dem wenigstens ein Teil von dessen Carboxylgruppen mit Alkalimetall- oder Anmonium-Kationen neutralisiert ist, wobei die Zusammensetzung eine MFR von 0,002 bis 10 dg/Min hat, gemessen bei 190 °C und unter einer Last von 2160 g, worin wenigstens das erste Ionomere durch Ketten des Polyamids ionisch vernetzt ist.

6. Ionomerzusammensetzung nach Anspruch 5, worin das Ethylenungesättigte Säure-Copolymere ein Ethylen-Acrylsäure-Copolymeres, Ethylen-Methacrylsäure-Copolymeres, Ethylen-Itaconsäure-Copolymeres, Ethylen-Maleinsäureanhydrid-Copolymeres, Ethylen-Monomethylmaleat-Copolymeres oder Ethylen-Monoethylmaleat-Copolymeres ist.

7. Ionomerzusammensetsung nach einem der Ansprüche 5 oder 6, worin die Metallionen $Zn^{2+}$, $Co^{2+}$, $Ni^{2+}$, $Mn^{2+}$, $Pb^{2+}$, $Cu^{2+}$, $Ca^{2+}$ oder $Mg^{2+}$ sind.

8. Ionomerzusammensetzung nach einem der Ansprüche 5 bis 7, worin das Polyamid-Oligomere ein Oligomeres ist, das primäre Aminogruppen an beiden Enden seines Moleküls hat, das durch Reaktion von Polycaprolactam mit einem primären Diamin erhalten wird.

9. Ionomerzusammensetzung, die von 91 bis 99 Gewichtsteile eines Ethylen-ungesättigte Carbonsäure-Copolymeren und 9 bis 1 Gewichtsteile eines Polyamid-Oligomeren umfaßt, das primäre Aminogruppen an beiden Enden seines Moleküls aufweist, wobei die Zusammensetzung eine MFR von 0,002 bis 10 dg/Min hat, gemessen bei 190 °C und unter einer Last von 2160 g, worin das Copolymere durch Ketten das Polyamids ionisch vernetzt ist.

10. Ionomerzusammensetzung nach Anspruch 9, worin das Ethylenungesättigte Säure-Copolymere ein Ethylen-Acrylsäure-Copolymeres, Ethylen-Methacrylsäure-Copolymeres, Ethylen-Itaconsäure-Copolymeres, Ethylen-Maleinsäureanhydrid-Copolymeres, Ethylen-Monomethylmaleat-Copolymeres oder Ethylen-Monoethylmaleat-Copolymeres ist.

11. Ionomerzusammensetzung nach Anspruch 9 oder 10, worin das Polyamid-Oligomere ein Oligomeres ist, das primäre Aminogruppen an beiden Enden seines Moleküls hat, das durch Reaktion von Polycaprolactam mit einem primären Diamin erhalten wird.

**Revendications**

1. Composition d'ionomère qui comprend 91 à 99 parties en poids d'un ionomère comprenant un copolymère éthylène-acide carboxylique insaturé dont les groupes carboxyle sont au moins partiellement neutralisés par des cations métalliques et 9 à 1 parties en poids d'un polyamide oligomère ayant des groupes amino primaires aux deux extrémités de sa chaîne, ladite composition ayant un indice de fluidité de 0,002 à 10 dg/min, tel que mesuré à 190°C et sous une charge de 2160 g, ledit ionomère étant réticulé ioniquement par des chaînes dudit polyamide.

2. Composition d'ionomère telle que revendiquée dans la revendication 1, dans laquelle ledit copolymère éthylèneacide insaturé est un copolymère éthylène-acide acrylique, un copolymère éthylène-acide méthacrylique, un copolymère éthylène-acide itaconique, un copolymère éthylène-anhydride maléique, un copolymère éthylène-maléate de monométhyle ou un copolymère éthylène-maléate de monoéthyle.

3. Composition d'ionomère telle que revendiquée dans la revendication 1 ou la revendication 2, dans laquelle lesdits cations métalliques sont $Zn^{2+}$, $Co^{2+}$, $Ni^{2+}$, $Mn^{2+}$, $Pb^{2+}$, $Cu^{2+}$, $Ca^{2+}$ ou $Mg^{2+}$.

4. Composition d'ionomère telle que revendiquée dans l'une quelconque des revendications précédentes, dans laquelle ledit polyamide oligomère est un oligomère ayant des groupes amino primaires aux deux extrémités de sa chaîne qui est obtenu par réaction de polycaprolactame avec une diamine primaire.

5. Composition d'ionomère qui comprend 91 à 99 parties en poids d'un premier ionomère comprenant un copolymère éthylène-acide carboxylique insaturé dont les groupes carboxyle sont au moins partiellement neutralisés par des cations de métal de transition, 9 à 1 parties en poids d'un polyamide oligomère ayant des groupes amino primaires aux deux extrémités de sa chaîne et 2 à 99 parties en poids, pour 100 parties en poids du poids total du premier ionomère et du polyamide oligomère, d'un second ionomère comprenant un copolymère éthylène-acide carboxylique insaturé dont les groupes carboxyle sont au moins partiellement neutralisés par des cations de métal alcalin ou d'ammonium, ladite composition ayant un indice de fluidité de 0,002 à 10 dg/min, tel que mesuré à 190°C et sous une charge de 2160 g, au moins ledit premier ionomère étant réticulé ioniquement par des chaînes dudit polyamide.

6. Composition d'ionomère telle que revendiquée dans la revendication 5, dans laquelle ledit copolymère éthylèneacide insaturé est un copolymère éthylène-acide acrylique, un copolymère éthylène-acide méthacrylique, un copolymère éthylène-acide itaconique, un copolymère éthylène-anhydride maléique, un copolymère éthylène-maléate de monométhyle ou un copolymère éthylène-maléate de monoéthyle.

7. Composition d'ionomère telle que revendiquée dans la revendication 5 ou la revendication 6, dans laquelle lesdits cations de métal de transition sont $Zn^{2+}$ $Co^{2+}$ $Ni^{2+}$, $Mn^{2+}$, $Pb^{2+}$, $Cu^{2+}$, $Ca^{2+}$ ou $Mg^{2+}$.

8. Composition d'ionomère telle que revendiquée dans l'une quelconque des revendications 5 à 7, dans laquelle ledit polyamide oligomère est un oligomère ayant des groupes amino primaires aux deux extrémités de sa molécule qui est obtenu par réaction de polycaprolactame avec une diamine primaire.

9. Composition d'ionomère qui comprend 91 à 99 parties en poids d'un copolymère éthylène-acide carboxylique insaturé et 9 à 1 parties en poids d'un polyamide oligomère ayant des groupes amino primaires aux deux extrémités de sa molécule, ladite composition ayant un indice de fluidité de 0,002 à 10 dg/min, tel que mesuré à 190°C et sous une charge de 2160 g, ledit copolymère étant réticulé ioniquement par des chaînes dudit polyamide.

10. Composition d'ionomère telle que revendiquée dans la revendication 9, dans laquelle ledit copolymère éthylèneacide carboxylique insaturé est un copolymère éthylène-acide acrylique, un copolymère éthylène-acide méthacrylique, un copolymère éthylène-acide itaconique, un copolymère éthylène-anhydride maléique, un copolymère éthylène-maléate de monométhyle ou un copolymère éthylène-maléate de monoéthyle.

11. Composition d'ionomère telle que revendiquée dans la revendication 9 ou la revendication 10, dans laquelle ledit polyamide oligomère est un oligomère ayant des groupes amino primaires aux deux extrémités de sa molécule qui est obtenu par réaction de polycaprolactame avec une diamine primaire.

EP 0 342 244 B1

FIG. 1

FIG.2(a)

FIG.2(b)